# EUROPÄISCHE PATENTSCHRIFT

(11) **EP 0 600 108 B1**
(45) Veröffentlichungstag und Bekanntmachung des Hinweises auf die Patenterteilung: **22.05.1996**
(21) Anmeldenummer: 92120376.6
(22) Anmeldetag: 28.11.1992
(51) Int. Cl.: H02G 3/04, H01R 25/16

(54) **Kabeleckkanal**
Corner cable raceway
Canal de coin pour câble

(43) Veröffentlichungstag der Anmeldung: 08.06.1994
(73) Patentinhaber: Hermann Kleinhuis GmbH. & Co. KG, D-58507 Lüdenscheid (DE)
(72) Erfinder: Kleinkorres,Uwe, W-5802 Wetter 1 (DE); Böing,Manfred, W-5880 Lüdenscheid (DE)
(74) Vertreter: Buse, Karl Georg, Dipl.-Phys.

(56) Entgegenhaltungen:
- WO-A-91/13482
- DE-A- 4 103 708

## Beschreibung

Die Erfindung bezieht sich auf einen Kabeleckkanal, dessen Seitenwände an winklig zueinander angeordneten Wänden eines Raumes od.dgl. anliegen, und der mindestens eine Kammer zur Unterbringung von Kabeln, Leitungen od.dgl. aufweist, deren Öffnung durch einen mit dem Kabeleckkanal verbindbaren Deckel lösbar verschließbar ist, wobei die vorderen freien Enden der Seitenwände des Kabeleckkanals jeweils unter Bildung eines Freiraumes aufeinander zu abgewinkelt sind und eine scharnierartige Deckelverrastung bilden, und wobei der Deckel wahlweise um eine der beiden Deckelverrastungen schwenkbar ist, und die Endlage dieser Verschwenkbewegung eine stabile Öffnungslage des Deckels bildet und dadurch eine wannenförmige Aufnahme für Kabel, Leitungen od.dgl. gebildet wird.

Kabeleckkanäle dieser Art sind in verschiedenen Ausführungsformen bekannt; sie haben sich an sich in der Praxis bewährt. Auf der anderen Seite kann es jedoch bei einigen bekannten Ausführungsformen solcher Kabeleckkanäle dann zu Schwierigkeiten kommen, wenn Winkelabweichungen der aneinanderstoßenden Wände eines Raumes auftreten, beispielsweise wenn diese von dem an sich gewünschten Winkel von 90° abweichen. Derartige Toleranzen hinsichtlich des Winkels zwischen den Wänden eines Raumes treten in der Praxis ziemlich häufig auf. Bei einigen bekannten Ausführungsformen von Kabeleckkanälen gibt es dann Schwierigkeiten, insbesondere im Hinblick auf die Deckelverrastung.

Ein anderer Nachteil einiger bekannter Ausführungsformen von solchen Kabeleckkanälen ist darin zu erblicken, daß zur Beschickung der Kammern des Kabeleckkanals der Deckel vollständig von dem Unterteil des Kabeleckkanals entfernt werden muß. Durch eine solche Handhabung wird die Einbringung der Kabel, Leitungen od.dgl. in das Innere der Kammern des Kabeleckkanals erschwert, denn es ist ja nicht nur ein Freilegen der Kammern durch Entfernen des Deckels erforderlich, sondern nach Beendigung der Beschickungsarbeiten des Kabeleckkanals muß der Deckel wieder in seine Ursprungslage zurückgebracht werden. Abgesehen davon besteht die Möglichkeit, daß ein komplett abgenommener Deckel verlorengehen kann.

Ein Kabeleckkanal der eingangs genannten Art ist durch die DE-A 14 03 708 bekanntgeworden. Bei diesem bekannten Kabeleckkanal fehlt ein Gehäuse zur Aufnahme eines oder mehrerer elektrischer Installationsgeräte. Insbesondere fehlt ein Gehäuse mit Kupplungen, die unmittelbar in die Aufnahmeräume der Deckelverrastung eingreifen. Das Gehäuse des bekannten Kabeleckkanals hat auch keine wahlweise benutzbaren Lagerstellen für Halteschrauben, die in die Wände eingreifen und das elektrische Installationsgerät in Anlage an den Kabeleckkanal halten.

Auf der anderen Seite gibt es einen Kabeleckkanal nach Wo 91/13482. Bei dieser Ausführungsform des Kabeleckkanals wird dann, wenn die elektrischen Einrichtungen, z.B. eine Steckdose, nicht benutzt werden sollen, die betreffende Stelle am Kabeleckkanal durch einen plattenförmigen Abdecker verschlossen. Dieser Abdecker wird durch Halteelemente am Kabeleckkanal gehalten. Wenn nun bei dieser bekannten Ausführungsform des Kabeleckkanals das elektrische Installationsgerät an einem gewünschten Platz angebracht werden soll, sind verschiedene Schritte erforderlich. Zunächst muß der erwähnte plattenförmige Abdecker entfernt werden. Es wird dann ein Connector als Basiselement eingesetzt. Zu diesem Connector gehören Seitenwände, die eine Öffnung begrenzen. Auf dem Boden des Connectors sind Terminal blocks befestigt. Diese sind so angeordnet, daß sie mit Schlitzen im Kabeleckkanal fluchten. An dem Terminal block befindet sich jeweils ein dünner Flachkontakt. Dieser wird mittels einer Schraube am Connector gehalten. Die Kontaktfüße dienen dazu, durch die Schlitze hindurchgeführt zu werden. Auf diese Weise soll ein Kontakt mit Kontaktstücken herbeigeführt werden. Dieser bekannte Connector wirkt mit den Aufnahmeräumen für die Deckelverrastung zusammen. Bei dieser bekannten Ausführungsform des Kabeleckkanals hat das Gehäuse des elektrischen Installationsgerätes keine wahlweise benutzbaren Lagerstellen für die Halteschrauben, die in Wände eingreifen, und das elektrische Installationsgerät in Anlage an dem Kabeleckkanal halten. Insbesondere fehlt eine indirekte Verbindung zwischen dem elektrischen Installationsgerät und dem Kabeleckkanalunterteil unter Benutzung von Schrauben.

Der Erfindung liegt die Aufgabe zugrunde, Kabeleckkanäle der eingangs näher gekennzeichneten Art weiter zu verbessern. Insbesondere sollen Möglichkeiten aufgezeigt werden, wie mit einem solchen Kabeleckkanal elektrische Installationsgeräte verbunden werden können. Dabei sollen nicht nur wirtschaftlich wohlfeile Lösungen aufgezeigt werden, sondern es sollen auch unterschiedliche Lösungen angegeben werden.

Zur Lösung dieser Aufgabe wird erfindungsgemäß vorgeschlagen, daß dem Kabeleckkanal ein Gehäuse zur Aufnahme eines oder mehrerer elektrischer Installationsgeräte zugeordnet ist, und daß dieses Gehäuse einerseits Kupplungen, die unmittelbar in die Aufnahmeräume der Deckelverrastung eingreifen und andererseits wahlweise benutzbare Lagerstellen für Halteschrauben aufweist, die in die Wände eingreifen, und die das elektrische Installationsgerät in Anlage an dem Kabeleckkanal halten. Durch die erfindungsgemäße Ausbildung eines Kabeleckkanals wird somit dem Benutzer eines solchen Kabeleckkanals die Möglichkeit gegeben, eine von zwei Möglichkeiten zur Anbringung des Gehäuses des elektrischen Installationsgerätes am Kabeleckkanal zu benutzen, und zwar einmal die direkte Befestigung über Kupplungen oder zum anderen die Benutzung von Schrauben, die in Wände eingreifen, und die das Gehäuse des elektrischen Installationsgerätes in Anlage an dem Kabeleckkanal halten. Es liegen somit zwei Alternativmöglichkeiten für die Anbringung des Gehäuses des elektrischen Installationsgerätes am Kabeleckkanal vor.

An sich ist es bekannt, einem Kabeleckkanal ein Gehäuse zur Aufnahme eines oder mehrerer elektrischer Installationsgeräte zuzuordnen. Erfindungsgemäß erfolgt jedoch diese Zuordnung zwischen den beiden Teilen in unterschiedlicher Weise. Einmal ist vorgesehen, das Gehäuse mit Kupplungen unmittelbar in die Aufnahmeräume der Deckelverrastung eingreifen zu lassen. In diesem Falle wird somit ein Teilbereich des Deckels entfernt. Dieser fehlende Teil des Deckels wird dann durch das Gehäuse ergänzt.

Diese Lösung hat den großen Vorteil, daß eine unmittelbare Verbindung des Gehäuses des elektrischen Installationsgerätes mit dem Kabeleckkanalunterteil erfolgen kann.

Bei der Alternativlösung hat das Gehäuse des elektrischen Installationsgerätes wahlweise benutzbare Lagerstellen für Halteschrauben, die ihrerseits in die Wände eingreifen und das elektrische Installationsgerät in Anlage an dem Kabeleckkanal halten. In diesem Falle wird praktisch eine indirekte Verbindung zwischen dem elektrischen Installationsgerät und dem Kabeleckkanalunterteil herbeigeführt.

Bei der bevorzugten Ausführungsform der Erfindung hat das Gehäuse des elektrischen Installationsgerätes im Bereich seines Bodens diametral gegenüberliegend angeformte Lagerstellen für in die Wand eingreifende Halteschrauben. Durch die Bohrungen der Lagerstellen hindurch kann der Schaft der Halteschraube greifen, so daß er in der Wand seinen Halt findet. Aus herstellungstechnischen Gründen ist es zweckmäßig, daß die Lagerstellen dem Gehäuse des Installationsgerätes unmittelbar angeformt werden.

Nach einem weiteren Vorschlag der Erfindung weisen zwei diametral gegenüberliegende Seitenwände des Gehäuses des elektrischen Installationsgerätes Verlängerungen auf, die jeweils eine in Richtung auf den Kabeleckkanal weisende Öffnung haben, deren Begrenzungskante der Krümmung des Deckels angepaßt ist. Dies bedeutet, daß das elektrische Installationsgerät mit seinem Gehäuse so gestaltet ist, daß der Deckel des Kabeleckkanals in die Öffnung der Verlängerung eingreift und sich an den Begrenzungswandungen dieser Öffnung abstützen kann. Der Deckelschnitt wird durch die Begrenzungskante abgedeckt.

Um hierbei eine Anpassung an unterschiedlich dimensionierte Kabeleckkanalunterteile zu bekommen, weist nach einem weiteren Vorschlag der Erfindung die Verlängerung zur Schaffung einer vergrößerten Öffnung einen wegbrechbaren Wandungsteil auf. Dies bedeutet, daß in der Regel das Gehäuse des elektrischen Installationsgerätes im Bereich der Verlängerung eine solche Öffnung aufweist, die den kleinsten Abmessungen des Kabeleckkanals angepaßt ist. Liegt dagegen eine größer dimensionierte Ausführungsform des Kabeleckkanals vor, so muß ein Wegbrechen des Wandungsteiles der Verlängerung erfolgen, um eine Anpassung an diese Größe des Kabeleckkanals zu bekommen.

Es empfiehlt sich, daß das Gehäuse des elektrischen Installationsgerätes eine lösbar mit seinem Gehäuse verbindbare Abdeckung aufweist. Eine solche Abdeckung kann beispielsweise mit dem Gehäuse verrastet werden. Dies geschieht zweckmäßig in der Weise, daß die Abdeckung an ihrer Innenseite liegend mehrere Befestigungshaken aufweist, die mit Begrenzungswandungen von Durchbrüchen in der Oberseite des Gehäuses zusammenwirken.

In der Praxis tritt häufig das Problem auf, daß unterschiedlich gestaltete elektrische Installationsgeräte mit dem Kabeleckkanal verbunden werden sollen. Diese elektrischen Installationsgeräte haben in aller Regel unterschiedlich gestaltete Abdeckungen. Um hier eine Vereinfachung sowohl bei der Herstellung als auch bei der Montage zu erzielen, werden nach einem weiteren Vorschlag der Erfindung ein und demselben Gehäuse eines elektrischen Installationsgerätes mehrere unterschiedlich gestaltete Abdeckungen zugeordnet. Von diesen Abdeckungen wird eine benutzt, nämlich diejenige, die dem vom Benutzer gewünschten Zweck dient.

In den Figuren der Zeichnungen ist die Erfindung in mehreren Ausführungsbeispielen dargestellt, und zwar zeigen:
- Fig. 1: im Querschnitt ein erstes Ausführungsbeispiel eines erfindungsgemäß gestalteten Kabelkanals nach seiner Anbringung an winklig zueinanderstehenden Wandungen eines Raumes od.dgl.; der Deckel des Kabelkanals befindet sich in seiner Schließlage,
- Fig. 2: den Kabelkanal nach der Fig. 1, jedoch ohne die mit ihm zusammenwirkenden Wandungen des Raumes, ebenfalls im Schnitt; der Deckel ist in ausgezogenen Linien in seiner ersten Öffnungsstellung und in strichpunktierten Linien in der zweiten möglichen Öffnungsstellung wiedergegeben,
- Fig. 3: eine zweite Ausführungsform eines erfindungsgemäßen Kabelkanals im Schnitt nach seiner Anbringung an winklig zueinanderstehenden Wandungen eines Raumes; dabei ist in ausgezogenenen Linien die Verschließstellung wiedergegeben, während in strichpunktierten Linien eine der beiden möglichen Öffnungsstellungen des Deckels dargestellt ist,
- Fig. 4: in vergrößertem Maßstab und im Schnitt, teilweise weggebrochen, eine der Deckelverrastungen im Zusammenwirken mit den Gegenrasten des Deckels, wobei der Deckel in seiner öffnungsstellung wiedergegeben ist,
- Fig. 5: im Querschnitt die zweite Ausführungsform des erfindungsgemäßen Kabelkanals nach der Anbringung an winklig zueinanderstehenden Wandungen mit einem zugeordneten elektrischen Installationsgerät, welches mittels Halteschrauben an den winklig zueinanderstehenden Wandungen des Raumes festgelegt ist, und zwar so, daß die Unterseite des elektrischen Installationsgerätes in Anlage mit dem Kabelkanal verbleibt,
- Fig. 6: eine der Fig. 5 entsprechende Schnittdarstellung eines erfindungsgemäßen Kabelkanals, jedoch mit einer anderen Anbringungsweise eines elektrischen Installationsgerätes, dabei ist ein Teil des Deckels des Kabelkanalunterteils entfernt, um ein direktes Zusammenkuppeln des elektrischen Installationsgerätes mit dem Kabelkanalunterteil zu erzielen,
- Fig. 7: in vergrößertem Maßstab und im Schnitt eine weitere Ausführungsform des erfindungsgemäßen Kabelkanals mit einem aufgesetzten elektrischen Installationsgerät,
- Fig. 8: teilweise im Schnitt, teilweise in Ansicht, eine der Seitenwandungen des elektrischen Installationsgerätes nach der Fig. 7 der Zeichnungen.

Es sei zunächst erwähnt, daß die in den Figuren der Zeichnungen dargestellten Kabelkanäle nur stellvertretend für eine Vielzahl von an sich möglichen anderen Kabelkanälen stehen. Auf die Darstellung der Art der Verbindung zwischen den Seitenwänden des Kabelkanals und den Wänden ist verzichtet worden. Für diese Verbindungen können in der einschlägigen Technik gebräuchliche Mittel eingesetzt werden. Darüber hinaus ist in den Figuren der Zeichnungen auf die Darstellung der in den Kammern unterzubringenden Kabel, Leitungen od.dgl. weitgehend verzichtet. Einige Kabel sind lediglich in einer Zwischenlage wiedergegeben.

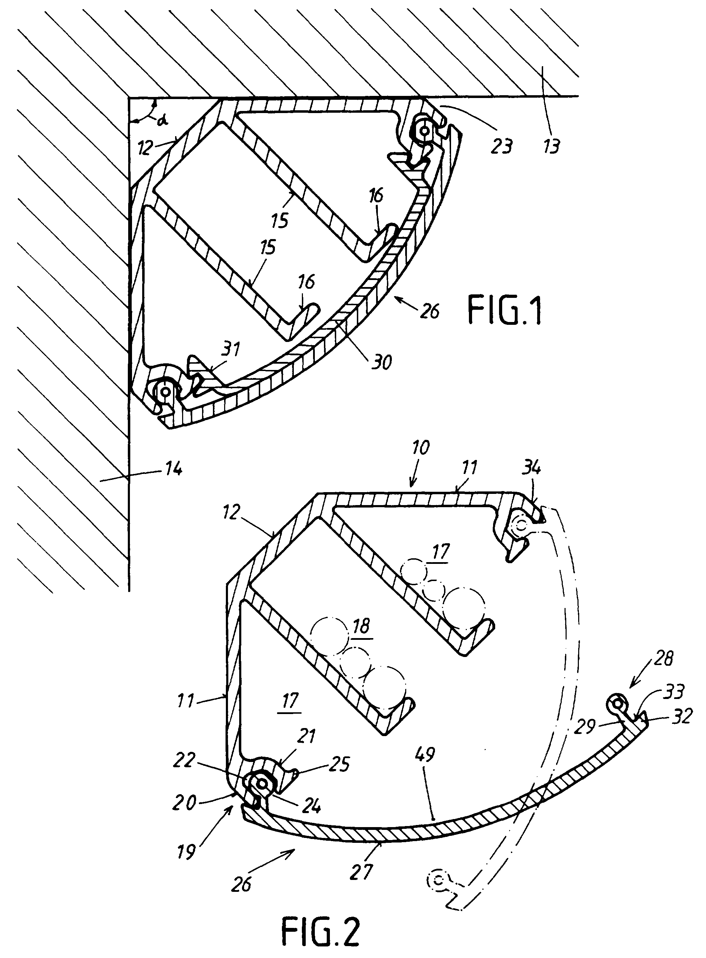

Im übrigen können alle in den Figuren der Zeichnungen fehlenden Teile eine an sich bekannte Ausbildung und Gestalt aufweisen. Dies gilt auch für die elektrischen Installationsgeräte, die mit dem Kabelkanal zusammenwirken sollen. In den Fig. 1 und 2 der Zeichnung ist ein erstes Ausführungsbeispiel eines erfindungsgemäßen Kabelkanals wiedergegeben. Es handelt sich dabei um einen sogenannten Eck-Kanal, der generell mit 10 bezeichnet ist. Sein Unterteil hat Seitenwände 11, die geneigt zueinander ausgebildet sind, wobei die unteren Teile der Seitenwände durch einen Boden 12 miteinander verbunden sind. Im Querschnitt gesehen, hat der Kabelkanal daher im wesentlichen V-förmige Gestalt, wobei jedoch der untere Abschnitt eines solchen V's entfernt ist. Die Außenflächen der Seitenwände 11 des Kabelkanals 10 dienen dem Zusammenwirken mit winklig zueinanderstehenden Wänden 13 und 14 eines Raumes, der nicht näher bezeichnet ist. An sich soll der mit α bezeichnete Winkel zwischen den Wänden 13 und 14 einen Betrag von 90° haben. In der Praxis kommt es jedoch häufiger vor, daß dieser Winkel α von 90° abweicht. Die erfindungsgemäßen Kabelkanäle sind so gestaltet, daß auch bei diesen Abweichungen ihr Anbringen und ihre Funktionsweise gesichert ist.

Im gewählten Ausführungsbeispiel nach den Fig. 1 und 2 ist der nicht näher bezeichnete Innenraum des Kabelkanals 10 durch zwei Trennwände 15 in die Kammern 17 und 18 unterteilt. Die Trennwände 15 sind im Eckbereich zwischen einer Seitenwand 11 und dem Boden 12 des Kabelkanals 10 angeformt. Sie sind im Querschnitt etwa L-förmig gestaltet, wobei der längere Schenkel dieses L's bis in die Nähe des aufgesetzten Deckels ragt. Der kürzere der beiden Schenkel der Trennwand 15 ist ein Flansch 16, der parallel zum Boden 12 verläuft. Die beiden Flansche 16 zeigen dabei gemäß der Ausführungsform nach den Fig. 1 und 2 in die gleiche Richtung. Die mittlere der beiden Kammern ist mit 18 und die beiden seitlichen sind mit 17 bezeichnet. In den Kammern 17 und 18 können in grundsätzlich bekannter, und daher nicht dargestellter Weise Kabel, Leitungen oder andere elektrische Einrichtungen untergebracht werden.

Die vorderen freien Enden der Seitenwände 11 des Kabelkanals sind als generell mit 19 bezeichnete Deckelverrastungen ausgebildet. Diese Deckelverrastungen sind aufeinander zu gerichtet, derart, daß zwischen ihrer Außenseite und dem benachbarten Bereich sowohl der Wand 13 als auch der Wand 14 ein Freiraum 23 entsteht. Jede Deckelverrastung 19 setzt sich zusammen aus einer außenliegenden seitlichen Begrenzungswand 20 und einer entfernt davon angeordneten innenliegenden seitlichen Begrenzungswand 21. Zwischen den Innenwänden dieser beiden Begrenzungswände liegt ein Aufnahmeraum 22, der im Querschnitt gesehen asymmetrisch ausgebildet ist. Der Aufnahmeraum 22 ist nach vorn hin offen; dort liegt eine Einführungsöffnung 24.

Die seitliche Begrenzungswand 21 der Deckelverrastung 19 ist im Bereich ihres freien Endes verdickt gestaltet. An dieser nicht näher bezeichneten Verdickung liegt ein innerer Fortsatz 25, der z.B. dazu dient, eine generell mit 30 bezeichnete Halteklammer lagezufixieren. Dies geschieht dadurch, daß die einstückig gehaltene Halteklammer 30 an ihren freien Enden jeweils einen Haltehaken 31 aufweist, der, wie aus Fig. 1 ersichtlich, in seiner wirksamen Lage mit dem inneren Fortsatz 25 der Deckelverrastung zusammenwirkt. Das Anbringen der Halteklammer 30 geschieht in einfacher Weise durch Aufstecken seiner Haltehaken 31 auf die inneren Fortsätze 25 der Deckelverrastung 19.

Die nicht näher bezeichnete Öffnung der Kammern 17 und 18 des Kabelkanals 10 kann durch einen generell mit 26 bezeichneten Deckel verschlossen werden. Dieser ist im dargestellten Ausführungsbeispiel einstückig aus einem der in der Elektroindustrie gebräuchlichen Isolierstoffe, insbesondere Kunststoffe, gefertigt. Er hat eine gekrümmte Grundfläche 27, an deren Innenseiten im Bereich der Enden liegend Verbindungsstege 29 angeformt sind, die in Richtung auf den Boden 12 des Kabelkanals 10 zeigen, und die im Bereich ihren freien Endes jeweils in eine generell mit 28 bezeichnete Gegenrast auslaufen. Diese Gegenrast 28 ist im Querschnitt gesehen kreisförmig gestaltet. Sie ist im gewählten Ausführungsbeispiel nicht massiv, sondern hat einen nicht näher bezeichneten inneren Hohlraum, um eine Materialanhäufung zu vermeiden. Die Begrenzungswände 20 und 21 müssen auffedern, weil der Durchmesser der Gegenrast 28 etwas größer gehalten ist, als der gegenseitige Abstand der Begrenzungswandungen der Einführungsöffnung 24 des Aufnahmeraumes 22 der Deckelverrastung 19. Es muß daher zur Einbringung der Gegenrast 28 in den Aufnahmeraum 22 der Deckelverrastung 19 eine gewisse Kraft aufgewandt werden, um die Begrenzungswandungen der Einführungsöffnung 24 aufzuweiten. Nach dem Einbringen der Gegenrast in den Aufnahmeraum 22 kehren die Begrenzungswandungen der Einführungsöffnung 24 dann in ihre Ruhelage zurück.

Die gekrümmte Grundfläche 27 des Deckels 26 hat an ihren beiden Enden jeweils einen kurzen Fortsatz 32, dessen dem Boden 12 des Kabelkanals 10 zugewandte Fläche als Abstützfläche 33 benutzbar ist. In der in der Fig. 2 in ausgezogenen Linien dargestellten Öffnungslage des Deckels 26 wirkt daher die Abstützfläche 33 mit der Außenseite 34 der Begrenzungswand 20 der Deckelverrastung 19 zusammen. Auf diese Weise wird mit einfachsten Mitteln eine Begrenzung der Schwenkbewegung des Deckels 26 herbeigeführt. Die in der Fig. 1 dargestellte Öffnungslage des Deckels 26 ist eine stabile, was bedeutet, daß der Deckel 26 in dieser Lage verbleibt. Es sei denn, der Benutzer führt mit Krafteinwirkung den Deckel 26 in die in der Fig. 1 dargestellte Ruhelage zurück, in welcher beide Gegenrasten 28 mit den Deckelverrastungen 19 zusammenwirken. Aus der Fig. 2 ist in strichpunktierten Linien ersichtlich, daß der Deckel 26 auch um die andere scharnierartige Deckelverrastung verschwenkt werden kann. Dem Benutzer ist somit die Möglichkeit gegeben, den Deckel 26 im Uhrzeigersinn oder entgegen diesem Uhrzeigersinn zu verschwenken. In beiden Offenlagen des Deckels 26 kann der Deckel nicht verlorengehen.

Aus der Fig. 2 der Zeichnungen ist ersichtlich, daß der Deckel 26 in seiner aufgeklappten Lage eine Aufnahme 49 für schematisch dargestellte Leitungen, Kabel od.dgl. bildet. Dies bedeutet, daß der Benutzer des erfindungsgemäßen Kabelkanals diese Leitungen zunächst in die Aufnahme 49 bei geöffnetem Deckel 26 einlegen kann. Beim Schließen des Deckels gelangen dann diese Leitungen in die Kammern 17 und 18 des Kabelkanals 10.

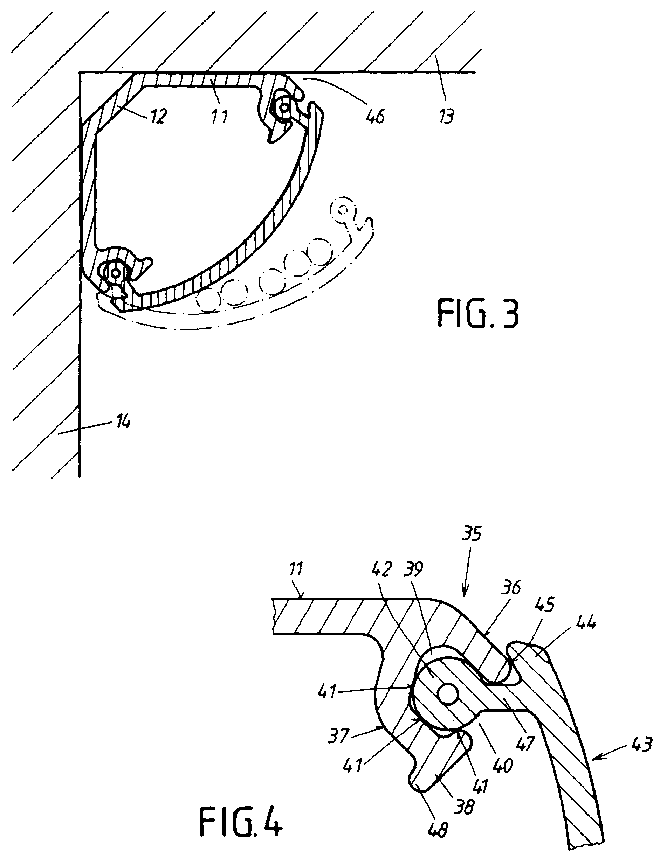

In den Fig. 3 und 4 der Zeichnungen ist ein zweites Ausführungsbeispiel des erfindungsgemäß ausgebildeten Kabelkanals 10 wiedergegeben. Soweit keine Änderungen im Bezug auf das Ausführungsbeispiel nach den Fig. 1 und 2 vorhanden sind, werden die gleichen Bezugszeichen in den Fig. 3 und 4 beibehalten. Dies gilt insbesondere für die Bezugszeichen 13 und 14, mit denen die Wände eines Raumes bezeichnet sind, die winklig zueinanderstehen, und in dessen Eckbereich der Kabelkanal 10 angebracht werden soll. Es fehlen bei dem Kabelkanal 10 nach den Fig. 3 und 4 Trennwände, die den Innenraum in mehrere Kammern unterteilt. Dies bedeutet, daß bei der Ausführungsform nach den Fig. 3 und 4 der Zeichnungen der Kabelkanal 10 nur einen einzigen großen Innenraum aufweist, der zur Unterbringung von Kabel, Leitungen od.dgl. dient. In der Fig. 3 der Zeichnungen ist ersichtlich, daß auch in diesem Falle der Deckel 26 in seiner Öffnungslage eine Aufnahme hat, in die die Leitungen, Kabel od.dgl. eingelegt werden können, um dann beim Verschwenken des Deckels in den Innenraum des Kabelkanalunterteils zu gelangen.

In den Fig. 3 und 4 der Zeichnungen ist jede der an den beiden freien Enden der Seitenwände 11 des Kabelkanals 10 angebrachten Deckelverrastungen mit 35 bezeichnet. Diese Deckelverrastung 35 hat eine außenliegende, seitliche Begrenzungswand 36 und in Abstand davon eine weitere seitliche Begrenzungswand 37, die innen liegt. Zwischen den beiden seitlichen Begrenzungswandungen 36 und 37 der Deckelverrastung 35 ist ein Aufnahmeraum 39 vorhanden, der im Querschnitt gesehen wiederum asymmetrisch gestaltet ist. Nach vorn hin ist der Aufnahmeraum 39 offen. Dort befindet sich die Einführungsöffnung 40. Diese wirkt wiederum mit einer der Gegenrasten des Deckels zusammen. Dabei sind bei diesem Ausführungsbeispiel nach den Fig. 3 und 4 der Zeichnungen die Gegenrasten mit 42 und der Deckel mit 43 bezeichnet.

Das äußere freie Ende der seitlichen inneren Begrenzungswand 37 der Deckelverrastung 35 hat eine Verdickung 38. Diese weist einen inneren Fortsatz 48 auf, der wiederum - vergleiche dazu die Fig. 3 der Zeichnungen - dazu dient, mit einem der beiden Haltehaken 31 eine Halteklammer 30 zusammenzuwirken. Auf die zeichnerische Darstellung der Halteklammer ist verzichtet.

Die Begrenzungswand des Aufnahmeraumes 39 hat mehrere mit 41 bezeichnete Abstützpunkte. Diese wirken mit Bereichen der im Querschnitt kreisförmig gestalteten Gegenrast 42 zusammen. Aus der Fig. 4 der Zeichnungen ergibt sich, daß mehrere Abstützpunkte 41 gleichzeitig in Wirkverbindung stehen, so daß eine gute Abstützung der Gegenrast im Bereich der Begrenzungswand des Aufnahmeraumes 39 der Deckelverrastung 35 vorhanden ist. In der in Fig. 4 dargestellten Lage ist ein Entfernen des Deckels 43 und damit ein Herausziehen der Gegenrast 42 aus dem Aufnahmeraum 39 nicht möglich. In dieser Lage liegt der Fortsatz 44 des Deckels 43 mit seiner Innenfläche an der Außenseite der seitlichen Begrenzungswand 36 der Deckelverrastung 35 an. Im Zusammenwirken dieser beiden Teile ist somit eine Begrenzung der Verschwenkbewegung des Deckels 43 erreicht. Aus der Fig. 3 der Zeichnungen ist ersichtlich, daß zwischen der Außenseite der seitlichen Begrenzungswand 36 der Deckelverrastung 35 einerseits und der benachbarten Wandung 13 bzw. 14 des Raumes ein Freiraum 46 verbleibt. Dies bedeutet, daß die vorderen freien Enden der Seitenwände 11 des Kabelkanals 10 im Abstand von den Wandungen 13 bzw. 14 liegen. Nachzutragen bleibt noch, daß die Abstützflächen des Fortsatzes 44 des Deckels 43 in der Fig. 4 der Zeichnungen mit 45 bezeichnet sind.

Bei beiden Ausführungsbeispielen des Kabelkanals 10 ist eine symmetrische Anordnung gewählt worden, d.h., die Gegenrasten des Deckels und die Deckelverrastungen des Kabelkanalunterteils sind jeweils untereinander gleich gestaltet.Dies ist für eine wirtschaftliche Herstellung des Kabelkanals 10 und des dazugehörigen Deckels 26 bzw. 43 vorteilhaft.

Im übrigen gilt auch bei dem zweiten Ausführungsbeispiel des Kabelkanals, daß das Anbringen bzw. das Entfernen des Deckels 43 vom Kabelkanalunterteil nur in einer ganz bestimmten Lage möglich ist. In allen anderen Lagen ist ein Herausnehmen bzw. ein Anbringen der Gegenrast nicht möglich.

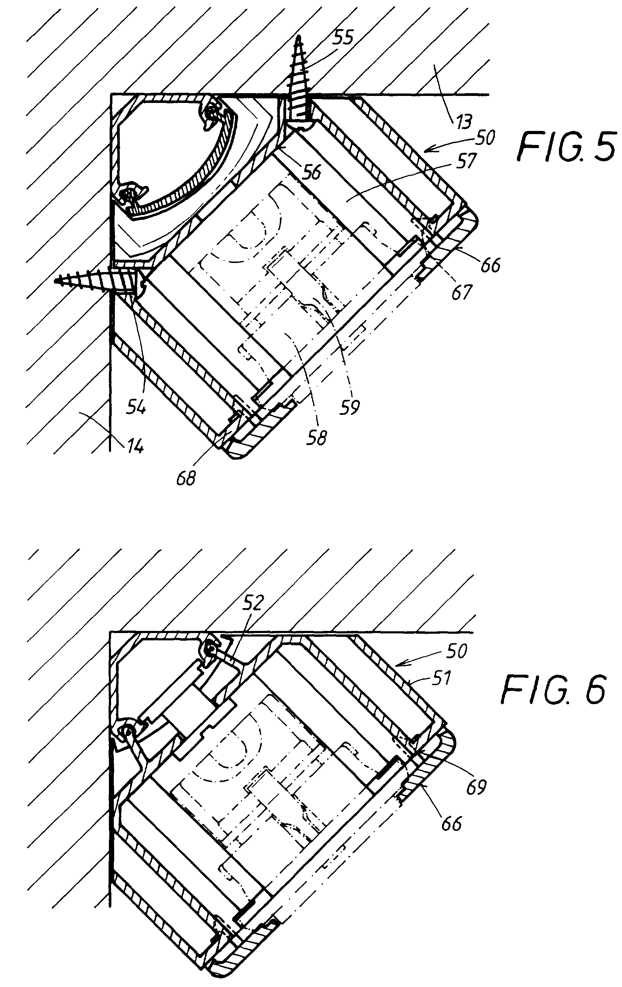

Den Fig. 5 bis 8 der Zeichnungen kann entnommen werden, daß dem Kabelkanal 10 ein generell mit 50 bezeichnetes Gehäuse zur Aufnahme eines oder mehrerer elektrischer Installationsgeräte zugeordnet ist, das einmal unterschiedliche Gestalt aufweisen kann und zum anderen auch in unterschiedlicher Weise in Wirkverbindung mit dem Kabelkanal zu bringen ist. Im einzelnen gilt dazu folgendes: Bei dem in der Fig. 5 dargestellten Gehäuse 50 handelt es sich um solches für eine Schukosteckdose. Das Gehäuse dieser Schutzkontaktsteckdose ist aus einem der in der Elektroindustrie gebräuchlichen Isolierstoffe gefertigt. Die Seitenwandungen des Gehäuses sind generell mit 51 bezeichnet. Sie sind paarweise untereinander gleichgestaltet, wobei die Seitenwände, die zu einem Paar gehören, diametral gegenüberliegend angeordnet sind. Zwei der beiden Seitenwände 51 des elektrischen Installationsgerätes 50 sind durch einen Boden 56 miteinander verbunden. An der Übergangsstelle zwischen Seitenwand 51 und Boden 56 ist in der Mitte des Bodens liegend jeweils eine Lagerstelle 54 angeformt, die dem Durchgriff einer Halteschraube 55 dient. Wie aus der Fig. 5 der Zeichnungen ersichtlich, sind die Lagerstellen 54 so gestaltet, daß sie geneigt zum Boden 56 verlaufen, und daß den Halteschrauben 55 damit die Möglichkeit gegeben wird, in die Wand 13 bzw. 14 zwecks Festlegens des elektrischen Installationsgerätes 50 einzudringen. In der in Fig. 5 dargestellten wirksamen Lage der Halteschrauben 15 liegt die Unterseite des elektrischen Installationsgerätes 50 in Anlage an dem Kabelkanal 10. Aus dieser Fig. 5 ist auch ersichtlich, daß bei dieser Anbringungsart des elektrischen Installationsgerätes 50 der Deckel 43 in seiner Lage am Kabelkanalunterteil verbleiben kann. Zum Durchführen von Kabel, Leitungen od.dgl. hat der Boden 56 eine nicht näher bezeichnete Öffnung, die mit einer ebenfalls nicht dargestellten Gegenöffnung des Deckels 43 des Kabelkanals 10 in Wirkverbindung treten kann.

Wie schon erwähnt, handelt es sich bei dem Gehäuse 50 nach der Fig. 5 der Zeichnungen um ein solches für eine Schutzkontaktsteckdose. Diese ist generell mit 58 bezeichnet, der zugehörige Schutzkontaktbügel mit 59. Auf eine nähere zeichnerische Darstellung der Schutzkontaktsteckdose 58 ist verzichtet, weil diese eine grundsätzlich bekannte Ausbildung haben kann.

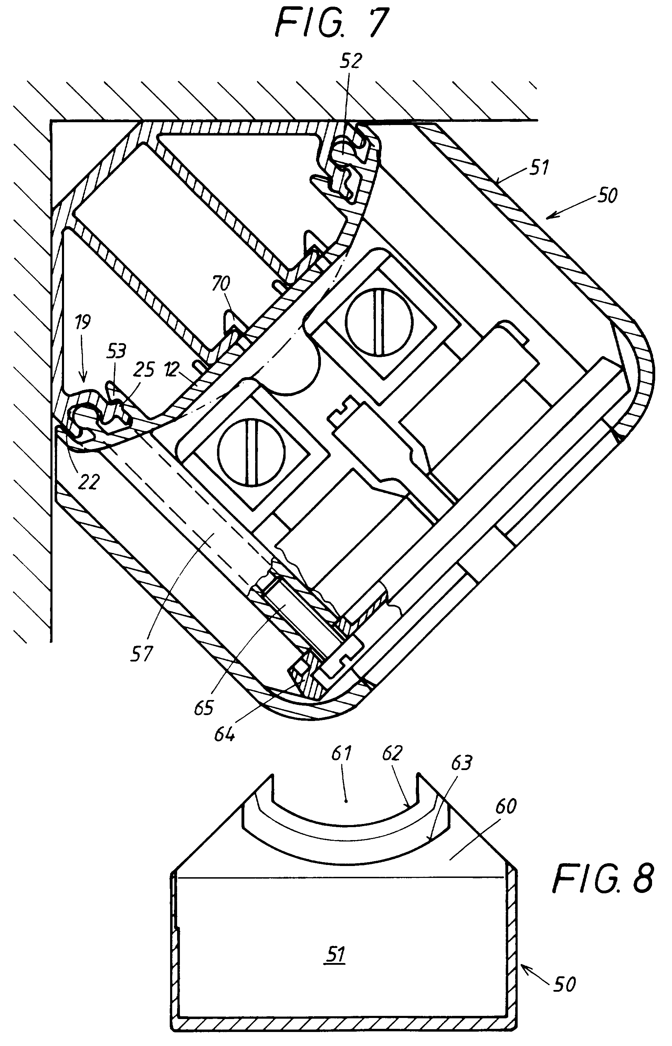

An den vier Ecken des Bodens 56 des Gehäuses des elektrischen Installationsgerätes ist jeweils eine Säule 57 angeformt, die jeweils eine sacklochartige Bohrung aufweist, in die jeweils eine Befestigungsschraube 65 eingreift - vergleiche dazu die Fig. 7 der Zeichnung -. Mittels der Halteschrauben 65 und der Säulen 57 wird ein generell mit 64 bezeichneter Abdeckrahmen des elektrischen Installationsgerätes 50 festgelegt.

Zu dem Gehäuse 50 gehört auch eine Abdeckung 66, die einstückig aus einem elektrisch isolierenden Werkstoff gefertigt ist. Die Abdeckung 66 hat an ihrer Innenseite liegend mehrere Befestigungshaken 67, die mit Begrenzungswandungen von Durchbrüchen 69 in der Oberseite 68 des Installationsgerätes 50 zusammenwirken. In der Fig. 5 der Zeichnung ist die Abdeckung 66 in ihrer wirksamen Lage am Gehäuse dargestellt. Die Abdeckung hat eine nicht näher bezeichnete kreisrunde Öffnung, die mit derjenigen der Steckdose 58 fluchtet.

Nicht dargestellt ist, daß einem Gehäuse 50 für ein elektrisches Installationsgerät mehrere unterschiedlich gestaltete und wahlweise benutzbare Abdeckungen zugeordnet werden können. Auf diese Weise ist es möglich, in dem Innenraum des Gehäuses unterschiedlich gestaltete elektrische Installationsgeräte unterzubringen. Je nachdem, welches Gerät in dem Gehäuse angebracht ist, kann dann die dazugehörige Abdeckung verwendet werden, die dann mit den geschilderten Mitteln mit dem Gehäuse lösbar verbunden werden kann.

Wie aus der Fig. 8 der Zeichnungen ersichtlich, hat das Gehäuse des elektrischen Installationsgerätes zwei Seitenwände 51, die diametral gegenüberliegen, und die jeweils mit einer Verlängerung 60 ausgestattet sind. Jede der beiden Verlängerungen 60 weist eine in Richtung auf den Kabelkanal 10 weisende Öffnung 61 auf, deren Begrenzungskante 62 der Krümmung des Deckels 26 bzw. 43 angepaßt ist. Jede der Verlängerungen 60 weist zur Schaffung einer vergrößerten Öffnung 61 einen wegbrechbaren Wandungsteil 63 auf. Durch Entfernen des Wandungsteiles 63 kann daher die Öffnung 61 der Verlängerung 60 erweitert werden, um so die Möglichkeit der Anpassung an größere Kabelkanäle 10 zu erhalten.

Während bei der Ausführungsform der Erfindung nach der Fig. 5 der Zeichnungen eine indirekte Verbindung zwischen dem Kabelkanal 10 einerseits und dem elektrischen Installationsgerät 50 andererseits vorhanden ist, zeigt die Fig. 6 eine weitere Variante, bei der eine direkte Verbindung des elektrischen Installationsgerätes 50 mit dem Kabelkanalunterteil herbeigeführt werden kann. Dazu gilt folgendes:

Gemäß dem Ausführungsbeispiel nach der Fig. 6 der Zeichnungen ist als Ausführungsbeispiel für das Gehäuse 50 wiederum ein solches für eine elektrische Schutzkontaktsteckdose gewählt. Es gilt auch nach wie vor, daß das Gehäuse nach vorn hin durch eine Abdeckung 66 verschlossen werden kann, wobei die Abdeckung lösbar mit dem Gehäuse in Verbindung steht. Der Boden 56 des Gehäuses hat an seiner Außenseite liegend angeformte Kupplungen 52, die, wie die Fig. 6 zeigt, unmittelbar in die Aufnahmeräume 22 bzw. 39 der Deckelverrastung 19, 28 bzw. 35, 42 eingreifen. Um dieses Eingreifen zu ermöglichen, ist ein Teil des Deckels 43 entfernt worden, so daß die Öffnungen der Deckelverrastungen zum Einführen der Kupplungen 52 zugänglich gemacht sind.

In der Fig. 7 ist ein abgewandeltes Ausführungsbeispiel der Erfindung wiedergegeben. Hier handelt es sich wiederum um eine direkte Anbringung des Gehäuses 50 an dem Kabelkanal 10; dieser hat die Ausbildung gemäß den Fig. 1 und 2. Dies heißt, der Innenraum des Kabelkanalunterteils ist durch Trennwände 15 in die Kammern 17 und 18 unterteilt.

Bei dem Ausführungsbeispiel der Erfindung nach der Fig. 7 der Zeichnungen ist auf eine besondere Abdeckung des Gehäuses des elektrischen Installationsgerätes 50 verzichtet. Nach wie vor ist aber in dem Innenraum des Gehäuses eine Schukosteckdose 58 untergebracht. Die Lagesicherung erfolgt wieder unter Benutzung des Abdeckrahmens 64 der mittels von vier Befestigungsschrauben an den Domen 57 festgelegt ist.

Der Boden 56 des elektrischen Installationsgerätes gemäß der Fig. 7 der Zeichnungen hat wiederum an seiner Außenseite liegend Kupplungen 52, die in der in Fig. 7 dargestellten Art und Weise unmittelbar in die Aufnahmeräume der Deckelverrastung eingreifen. Um einen zusätzlichen Halt zu bekommen, sind der Unterseite des Bodens 56 noch Haken 53 angeformt, die mit den inneren Fortsätzen 25 der seitlichen Begrenzungswand 21 der Deckelverrastung 19 zusammenwirken. Darüber hinaus weist der Boden 56 des Gehäuses des elektrischen Installationsgerätes 50 nach der Fig. 7 der Zeichnungen noch zwei weitere Haltehaken 70 auf, die in ihrer wirksamen Lage hinter dem Flansch 16 der Trennwand 15 greifen - vergleiche dazu die Fig. 7 der Zeichnungen -. Auch bei diesem Ausführungsbeispiel ist vor Anbringen des elektrischen Installationsgerätes 50 ein Teilbereich des Deckels 26 entfernt worden, damit die Kupplungen 52 unmittelbar in die Aufnahmeräume der Deckelverrastung 19 eingreifen können.

Wie bereits erwähnt, sind die dargestellten Ausführungen nur beispielsweise Verwirklichungen der Erfindung. Vielmehr sind noch mancherlei andere Ausführungen und Anwendungen möglich. Insbesondere kann die Erfindung auch bei anderen als den dargestellten Kabelkanälen Verwendung finden. Es kann die Gestaltung sowohl der Deckelverrastung als auch die der Gegenrasten abweichend von den dargestellten Ausführungsbeispielen gewählt werden.

### Bezugszeichenliste :

- 10 -: Kabelkanal (Eck-Kanal)
- 11 -: Seitenwand (von 10)
- 12 -: Boden
- 13 -: Wand
- 14 -: Wand
- 15 -: Trennwand
- 16 -: Flansch (an 15)
- 17 -: Kammer (seitlich)
- 18 -: Kammer (mittig)
- 19 -: Deckelverrastung (an 11) (I. Ausführung Fig. 1 und 2)
- 20 -: seitliche Begrenzungswand (von 19 außen)
- 21 -: seitliche Begrenzungswand (von 19 innen)
- 22 -: Aufnahmeraum (von 19)
- 23 -: Freiraum
- 24 -: Einführungsöffnung
- 25 -: innere Fortsätze (an 21)
- 26 -: Deckel
- 27 -: gekrümmte Grundfläche (von 26)
- 28 -: Gegenrast (an 26)
- 29 -: Verbindungssteg (zwischen 27 und 28)
- 30 -: Halteklammer
- 31 -: Haltehaken (von 30)
- 32 -: Fortsatz (von 27)
- 33 -: Abstützfläche (von 32)
- 34 -: Außenseite (von 20)
- 34 -: Deckelverrastung (II. Ausführung Fig. 3 und 4)
- 36 -: seitliche Begrenzungswand (von 35 außen)
- 37 -: seitliche Begrenzungswand (von 35 innen)
- 38 -: verdickter Endbereich (von 37)
- 39 -: Aufnahmeraum (von 35)
- 40 -: Einführungsöffnung (von 39)
- 41 -: Abstützpunkt (für 28 bzw. 42)
- 42 -: Gegenrast
- 43 -: Deckel
- 44 -: Fortsatz (von 43)
- 45 -: Abstützflansch (von 44)
- 46 -: Freiraum (zwischen 13 und 36)
- 47 -: Verbindungssteg
- 48 -: innerer Fortsatz (an 38)
- 49 -: Aufnahme (von 26 bzw. 43)
- 50 -: Gehäuse zur Aufnahme eines oder mehrerer Installationsgeräte
- 51 -: Seitenwand (von 50)
- 52 -: Kupplung (von 50)
- 53 -: Haken
- 54 -: Lagerstelle
- 55 -: Halteschrauhe
- 56 -: Boden (von 50)
- 57 -: Säule (an 56)
- 58 -: Steckdose (in 50)
- 59 -: Schutzkontaktbügel
- 60 -: Verlängerung (von 51)
- 61 -: Öffnung (in 60)
- 62 -: Begrenzungskante (von 61)
- 63 -: wegbrechbarer Wandungsteil (von 60)
- 64 -: Abdeckrahmen (von 58)
- 65 -: Befestigungsschraube
- 66 -: Abdeckung
- 67 -: Befestigungshaken
- 68 -: Oberseite (von 50)
- 69 -: Durchbruch (in 68)
- 70 -: Haltehaken

- α -: Winkel (zwischen 13 und 14)

## Patentansprüche

1. Kabeleckkanal (10), dessen Seitenwände (11) an winklig zueinander angeordneten Wänden (13,14) eines Raumes od.dgl. anliegen, und der mindestens eine Kammer (17,18) zur Unterbringung von Kabeln, Leitungen od.dgl. aufweist, deren Öffnung durch einen mit dem Kabeleckkanal (10) verbindbaren Deckel (26) lösbar verschließbar ist, wobei die vorderen freien Enden der Seitenwände (11) des Kabeleckkanals (10) jeweils unter Bildung eines Freiraumes (23 bzw. 46) aufeinander zu abgewinkelt sind und eine scharnierartige Deckelverrastung (19 - 28) bzw. (35 - 42) bilden, und wobei der Deckel (26) wahlweise um eine der beiden Deckelverrastungen (19,28 bzw. 35-42) schwenkbar ist, und die Endlage dieser Verschwenkbewegung eine stabile Öffnungslage des Deckels (26 bzw. 43) bildet und dadurch eine wannenförmige Aufnahme (49) für Kabel, Leitungen od.dgl. gebildet wird,
**dadurch gekennzeichnet,**
daß dem Kabeleckkanal (10) ein Gehäuse (50) zur Aufnahme eines oder mehrerer elektrischer Installationsgeräte zugeordnet ist, und daß dieses Gehäuse (50) einerseits Kupplungen (52), die unmittelbar in die Aufnahmeräume (22 bzw. 39) der Deckelverrastung (19,28 bzw. 35,42) eingreifen und andererseits wahlweise benutzbare Lagerstellen (54) für Halteschrauben (55) aufweist, die in die Wände (13,14) eingreifen, und die das elektrische Installationsgerät in Anlage an dem Kabeleckkanal (10) halten.

2. Kabeleckkanal nach Anspruch 1, dadurch gekennzeichnet, daß das Gehäuse (50) im Bereich seines Bodens (56), diametral gegenüberliegend, angeformte Lagerstellen (54) für die in die Wand (13) bzw. (14) eingreifenden Halteschrauben (55) aufweist.

3. Kabeleckkanal nach Anspruch 1 und 2, dadurch gekennzeichnet, daß zwei diametral gegenüberliegende Seitenwände (51) des Gehäuses (50) Verlängerungen (60) aufweisen, die jeweils eine in Richtung auf den Kabeleckkanal (10) weisende Öffnung (61) aufweisen, deren Begrenzungskante (62) der Krümmung des Deckels (26 bzw. 43) angepaßt ist, so daß der Deckelschnitt durch diese Begrenzungskante abgedeckt wird (Fig. 8).

4. Kabeleckkanal nach Anspruch 3, dadurch gekennzeichnet, daß die Verlängerung (60) zur Schaffung einer vergrößerten Öffnung (61) einen wegbrechbaren Wandungsteil (63) aufweist (Fig. 8).

5. Kabeleckkanal nach einem oder mehreren der vorangehenden Ansprüche, dadurch gekennzeichnet, daß das Gehäuse (50) eine lösbar mit demselben verbindbare Abdeckung (66) aufweist.

6. Kabeleckkanal nach Anspruch 5, dadurch gekennzeichnet, daß die Abdeckung (66) an ihrer Innenseite liegend mehrere Befestigungshaken (67) aufweist, die mit Begrenzungswandungen von Durchbrüchen (69) in der Oberseite (68) des Installationsgerätes zusammenwirken.

7. Kabeleckkanal nach Anspruch 5 und 6, gekennzeichnet durch die Zuordnung von mehreren unterschiedlich gestalteten und wahlweise benutzbaren Abdeckungen (66) zu dem Gehäuse (50).

## Claims

1. Corner cable raceway (10), with its lateral walls (11) positioned at walls (13,14) of a room etc. positioned at an angle to each other and featuring at least one chamber (17, 18) for accommodation of cables, pipelines, etc., whose opening is lockable by a lid (26) connectable to the corner cable raceway (10), whereby the front free ends of the lateral walls (11) of the corner cable raceway (10) respectively with formation of a vacant space (23 resp. 46) are angled to each other and form a hinge-type lid locking (19-28) resp. (35-42) and with the lid (26) being optionally swiveling around one of the two lid lockings (19-28 resp. 35-42) and the terminal position of this swivel movement forming a stable opening position of the lid (26 resp. 43) thus forming a tub-like receptacle (49) for cables, pipelines, etc.,
characterized by,
the corner cable raceway (10) being allocated a casing (50) for housing one or multiple electrical installation devices and this housing (50) on one hand featuring couplings (52) directly fitting into the holding spaces (22 resp. 39) of the lid locking (19, 28 resp. 35, 42) and on the other featuring optionally utilizable bearing points (54) for mounting screws (55), which enter the walls (13, 14) and hold the attached electrical installation device to the corner cable raceway (10).

2. Corner cable raceway according to claim 1 characterized by the casing (50) in the area of its floor (56) featuring formed-on bearing points (54) located diametrically opposite to each other for the mounting screws (55) engaging into the wall (13) resp. (14).

3. Corner cable raceway according to claim 1 and 2 characterized by the lateral walls (51) of the casing (50) located diametrically opposite to each other featuring extensions (60) which respectively feature an opening (61) directed at the corner cable raceway (10) and whose limiting edge (62) is adapted to the lid's (26 resp. 43) curvature with the result that the lid cut is covered by this limitation edge (fig. 8).

4. Corner cable raceway according to claim 3 characterized by the extension (60) featuring a removable wall element (63) for creation of an enlarged opening (61) (fig. 8).

5. Corner cable raceway according to one or multiple of the above claims characterized by the casing (50) featuring a detachable cover (66) connectable to the same.

6. Corner cable raceway according to claim 5 characterized by the cover (66) featuring several clamping hooks (67) on its interior side which cooperate with limitation rims of breakthroughs (69) on the upper side (68) of the installation device.

7. Corner cable raceway according to claim 5 and 6 characterized by the allocation of several differently designed and optionally useable covers (66) for the casing (50).

## Revendications

1. Canal d'angle pour câble (10), dont les parois latérales (11) sont disposées contre des parois (13, 14) d'une pièce ou analogue formant un angle, et qui présente au moins une chambre (17, 18) destinée à recevoir des câbles, des conducteurs ou analogues, dont l'ouverture est susceptible d'être fermée par un couvercle amovible (26) susceptible d'être relié au canal d'angle pour câble (10), dans lequel les extrémités libres avant des parois latérales (11) du canal d'angle pour câble (10) sont chacune coudées l'une vers l'autre en ménageant un espace libre (23 ou 46) et constituent un verrou de couvercle (19-28) ou (35-42) du type d'une charnière, et dans lequel le couvercle (26) est susceptible de pivoter au choix autour de l'un des deux verrous de couvercle (19-28 ou 35-42), la position extrême de ce mouvement de pivotement constituant une position stable d'ouverture du couvercle (26 ou 43), de sorte à former un logement (49) en forme de bac pour des câbles, conducteurs, ou analogue,
caractérisé en ce que :
- un boîtier (50) pour recevoir un ou plusieurs appareils électriques est associé au canal d'angle pour câble (10), et en ce que ce boîtier (50) présente d'une part des accouplements (52) qui entrent en prise directement dans les logements (22 ou 39) de verrou de couvercle (19-28 ou 35-42), et d'autre part des paliers d'appui (54) utilisables sélectivement pour des vis de fixation, qui pénètrent dans les parois (13, 14), et qui maintiennent l'appareil électrique en position sur ce canal d'angle pour câble (10).

2. Canal d'angle pour câble selon la revendication 1, caractérisé en ce que le boîtier (50) présente au voisinage de son fond (56) des paliers d'appui (54) diamétralement opposés pour les vis de fixation (55) pénétrant dans les parois (13) ou (14).

3. Canal d'angle pour câble selon la revendication 1 et 2, caractérisé en ce que deux parois latérales (51) diamétralement opposées du boîtier (50) présentent des prolongements (60), qui présentent chacune dans la direction du canal d'angle pour câble (10) une ouverture (61), dont le bord (62) est adapté à la courbure du couvercle (26 ou 43), de sorte que la coupe du couvercle soit recouverte par le bord (fig. 8).

4. Canal d'angle pour câble selon la revendication 3, caractérisé en ce que le prolongement (60) présente une partie de paroi (63) susceptible d'être cassée pour ménager une ouverture (61) plus importante (fig. 8).

5. Canal d'angle pour câble selon l'une ou plusieurs des revendications précédentes, caractérisé en ce que le boîtier (50) présente un couvercle (66) amovible et susceptible d'être fixé sur le boîtier.

6. Canal d'angle pour câble selon la revendication 5, caractérisé en ce que le couvercle (66) présente plusieurs crochets de fixation (67) disposés sur sa face interne, qui coopèrent avec des parois d'arête d'ajours (69) de la face supérieure (68) de l'appareil électrique.

7. Canal d'angle pour câble selon les revendications 5 et 6, caractérisé en ce que plusieurs couvercles (66) de formes différentes et utilisable au choix sont associés au boîtier (50).
